# EUROPÄISCHE PATENTSCHRIFT

(11) **EP 1 076 634 B1**
(45) Veröffentlichungstag und Bekanntmachung des Hinweises auf die Patenterteilung: **26.06.2002**
(21) Anmeldenummer: 99923417.2
(22) Anmeldetag: 15.04.1999
(51) Int. Cl.: C01B 21/26

(54) **VERFAHREN ZUR KATALYTISCHEN ZERSETZUNG VON N 2?O**
METHOD FOR THE CATALYTIC DECOMPOSITION OF N 2?O
PROCEDE POUR LA DECOMPOSITION CATALYTIQUE DE N 2?O

(30) Priorität: 27.04.1998 DE 19819882
(43) Veröffentlichungstag der Anmeldung: 21.02.2001
(73) Patentinhaber: BASF AKTIENGESELLSCHAFT, 67056 Ludwigshafen (DE)
(72) Erfinder: SCHUMACHER, Volker, D-67227 Frankenthal (DE); BÜRGER, Gert, D-68199 Mannheim (DE); FETZER, Thomas, D-67346 Speyer (DE); BAIER, Michael, D-68161 Mannheim (DE); HESSE, Michael, D-67549 Worms (DE)
(74) Vertreter: Isenbruck, Günter
(86) Internationale Anmeldenummer: EP9902544
(87) Internationale Veröffentlichungsnummer: WO9955621

(56) Entgegenhaltungen:
- EP-A- 0 359 286
- EP-A- 0 564 144
- DE-A- 19 533 715
- DE-A- 19 805 202
- US-A- 5 478 549

## Beschreibung

Die Erfindung betrifft ein Verfahren zur katalytischen Zersetzung von N₂O in einem bei der Herstellung von Salpetersäure durch katalytische Oxidation von Ammoniak erhaltenen Gasgemisch. Die Erfindung betrifft weiterhin einen zur Durchführung des Verfahrens geeigneten Reaktor.

Bei der großtechnischen Herstellung von Salpetersäure nach dem Ostwald-Verfahren wird Ammoniak an einem edelmetallhaltigen Katalysator mit Sauerstoff zu Stickoxiden umgesetzt, die anschließend in Wasser absorbiert werden. Dabei werden Ammoniak und Sauerstoff beziehungsweise Luft in einem Reaktor bei Temperaturen im Bereich von 800 bis 955°C an einem edelmetallhaltigen Katalysatometz umgesetzt. Das Katalysatornetz enthält dabei als aktive Metalle in der Regel Platin und Rhodium. Bei der katalytischen Umsetzung wird Ammoniak zunächst zu Stick-stoffmonoxid oxidiert, das anschließend mit Sauerstoff zu Stickstoffdioxid beziehungsweise Distickstofftetroxid weiteroxidiert wird. Das erhaltene Gasgemisch wird nach Abkühlen in einen Absorptionsturm geführt, in dem Stickstoffdioxid in Wasser absorbiert und zu Salpetersäure umgesetzt wird. Der Reaktor für die katalytische Verbrennung von Ammoniak enthält ferner hinter dem Katalysatornetz ein sogenanntes Rückgewinnungsnetz, um bei den hohen Umsetzungstemperaturen verdampfte Katalysatormetalle abzuscheiden und damit zurückzugewinnen. In Flußrichtung hinter dem Rückgewinnungsnetz ist ein Wärmetauscher angeordnet, mit dem das erhaltene Gasgemisch abgekühlt wird. Die Absorption wird außerhalb des eigentlichen Reaktors in einer getrennten Absorptionskolonne durchgeführt.

Die Verbrennung und die Absorption können auf einem einheitlichen Druckniveau durchgeführt werden. Dabei kann bei einem mittleren Druck von etwa 230 bis 600 kPa oder bei einem hohen Druck von etwa 700 bis 1100 kPa gearbeitet werden. Bei einem Verfahren mit zwei Druckstufen wird die Absorption bei einem höheren Druck als die Verbrennung durchgeführt. Bei der Verbrennung beträgt der Druck dabei etwa 400 bis 600 kPa und bei der Absorption etwa 900 bis 1400 kPa.

Eine Übersicht über das Ostwald-Verfahren findet sich beispielsweise in Ullmann's Encyclopedia of Industrial Chemistry, 5. Auflage, Band A 17, Seiten 293 bis 339 (1991).

Bei der Verbrennung von Ammoniak wird neben Stickstoffmonoxid und Stickstoffdioxid beziehungsweise Distickstofftetroxid in der Regel auch N₂O (Distickstoffmonoxid) als Nebenprodukt gebildet. Im Gegensatz zu den anderen gebildeten Stickoxiden wird N₂O im Laufe des Absorptionsverfahrens nicht vom Wasser absorbiert. Wird keine weitere Stufe zur Entfernung von N₂O vorgesehen, so kann es in einer Konzentration von etwa 500 bis 3000 ppm im Abgas in die Um-gebung gelangen.

Da N₂O als Treibhausgas gilt und am Abbau der Ozonschicht beteiligt ist, ist eine möglichst weitgehende Entfernung aus dem Abgas wünschenswert. Mehrere Verfahren zur Entfernung von N₂O aus Abgasströmen sind beschrieben.

In der DE-A-195 33 715 ist ein Verfahren zum Entfernen von Stickoxiden aus einem Gasstrom beschrieben, bei dem die Stickoxide außer N₂O in einem Absorptionsmittel absorbiert werden und anschließend verbleibendes N₂O in einem Spaltreaktor katalytisch bei Temperaturen von 700 bis 800°C zersetzt wird. Da bei dieser Zersetzung Stickoxide gebildet werden können, kann sich eine selektive katalytische Reduktion (SCR) anschließen.

In US 5,478,549 ist ein Verfahren zur Herstellung von Salpetersäure nach Ostwald beschrieben, bei dem der Gehalt an N₂O dadurch vermindert wird, daß nach der Oxidation der Gasstrom bei einer Temperatur von mindestens 600°C über ein Katalysatorbett aus Zirkoniumoxid geführt wird. Die genaue Lage des Katalysatorbetts ist jedoch nicht angegeben. Es wird nur ausgeführt, daß Zirkoniumoxid in Form zylindrischer Pellets unterhalb des Rückgewinnungsnetzes angeordnet ist. Die Raumgeschwindigkeit im Reaktor beträgt 30.000 h bei 4 bar und 600°C.

In der EP-B 0 359 286 ist ein Verfahren zur Reduktion von N₂O beschrieben. Dazu wird ein Reaktor zur Durchführung des Ostwald-Verfahrens derart modifiziert, daß die nach der katalytischen Verbrennung erhaltenen Gase vor der Abkühlung durch den Wärmetauscher einer Retentionszeit von 0,1 bis 3 Sekunden ausgesetzt sind. Gegebenenfalls kann zusätzlich ein Katalysator zur selektiven Zersetzung von N₂O vorgesehen werden.

Aufgabe der vorliegenden Erfindung ist die Bereitstellung eines Verfahrens und einer Vorrichtung zur Herstellung von Salpetersäure nach dem Ostwald-Verfahren, wobei der N₂O-Gehalt der Abgase möglichst effektiv und mit geringem Aufwand vermindert werden kann. Das Verfahren soll auch in bestehende Anlagen integriert werden können und vorzugsweise den Anteil an Wertprodukt erhöhen. Zudem sollen zusätzliche Aufheizungs- und Abkühlungsschritte für das Abgas vermieden werden, so daß die Entfernung von N₂O wirtschaftlich durchgeführt werden kann.

Die Aufgabe wird erfindungsgemäß gelöst durch einen Reaktor für die katalytische Oxidation von Ammoniak zu Stickoxiden, der in Flußrichtung in dieser Reihenfolge einen Edelmetallnetzkatalysator und einen Wärmetauscher enthält, wobei zwischen dem Edelmetallnetzkatalysator und dem Wärmetauscher ein Katalysator zur Zersetzung von N₂O angeordnet ist, der herstellbar ist durch Vereinigen von CuAl₂O₄ mit Zinn, Blei und/oder einem Element der II. Haupt- oder Nebengruppe des Periodensystems der Elemente als Oxid oder Salz oder in elementarer Form, und anschließendes Calcinieren bei einer Temperatur von 300 bis 1300°C und einem Druck im Bereich von 0,1 bis 200 bar.

Die Aufgabe wird zudem gelöst durch ein Verfahren zur katalytischen Zersetzung von N₂O in einem bei der Herstellung von Salpetersäure durch katalytische Oxidation von Ammoniak erhaltenen Gasgemisch an einem Katalysator zur Zersetzung von N₂O, wobei das aus der katalytischen Oxidation von Ammoniak im obigen Reaktor erhaltene heiße Gasgemisch vor einer nachfolgenden Abkühlung mit dem Katalysator zur Zersetzung von N₂O kontaktiert wird.

Die Erfindung betrifft ferner eine Vorrichtung zur Herstellung von Salpetersäure aus Ammoniak, umfaßend in dieser Reihenfolge
- einen Reaktor wie vorstehend beschrieben,
- eine Absorptionseinheit zur Absorption von Stickoxiden in einem wäßrigen Medium und gegebenenfalls
- eine Reduktionseinheit zur selektiven katalytischen Reduktion von Stickoxiden.

Erfindungsgemäß wurde gefunden, daß N₂O direkt im Reaktor zur katalytischen Oxidation von Ammoniak umgesetzt werden kann, wenn obiger Katalysator zwischen dem Edelmetallnetzkatalysator und dem Wärmetauscher angeordnet ist. Dadurch wird als Nebenprodukt gebildetes N₂O unmittelbar nach der Entstehung zersetzt. Die Zersetzung erfolgt dabei auf dem Temperaturniveau, das bei der katalytischen Oxidation von Ammoniak vorliegt. Eine Erwärmung oder ein Abkühlen des gasförmigen Reaktionsgemisches ist somit nicht notwendig. Der erfindungsgemäß eingesetzte Katalysator zur Zersetzung von N₂O wird direkt im Reaktor angeordnet, vorzugsweise zwischen einem nach dem Edelmetallkatalysator angeordneten Edelmetallrückgewinnungsnetz und dem Wärmetauscher. Üblicherweise sind Reaktoren für das Ostwald-Verfahren mit einem Einsatz zur Aufnahme des Edelmetallkatalysators und des Edelmetallrückgewinnungsnetzes versehen. Diese Reaktoren können einfach modifiziert werden, indem zusätzlich eine Aufnahmevorrichtung für den N₂O-Zersetzungskatalysator vorgesehen wird.

Die geringe erforderliche Höhe des erfindungsgemäßen Katalysatorbetts erlaubt den Einbau in bestehende Reaktoren ohne größere Umbauten der Reaktoren. Damit können bestehende Reaktoren modifiziert werden, um das erfindungsgemäße Verfahren durchführen zu können, ohne daß ein Austausch des Reaktors notwendig ist. Die Durchführung des Ostwald-Verfahrens kann dabei auf einem Druckniveau oder auf zwei Druckniveaus durchgeführt werden, wie es vorstehend beschrieben ist. Die Höhe des Katalysatorbetts beträgt vorzugsweise 2 bis 50 cm, besonders bevorzugt 5 bis 10 cm. Die Verweilzeit am Katalysator ist im Betrieb vorzugsweise kleiner als 0,1 s. Damit ist der Druckabfall durch den Einbau des Katalysators sehr gering, es kann mit einer kleinen Menge an Katalysator gearbeitet werden, und das Gas muß nach der Oxidation nicht lange auf einem hohen Temperaturniveau gehalten werden, so daß Nebenreaktionen weitgehend unterdrückt werden können.

Erfindungsgemäß erfolgt die Zersetzung von N₂O im Reaktor zur Oxidation von Ammoniak bei der Oxidationstemperatur, in der Regel bei einer Temperatur im Bereich von 600 bis 950, vorzugsweise 800 bis 930, insbesondere 850 bis 920°C. Der Druck beträgt dabei je nach dem Druckniveau, bei dem das Ostwald-Verfahren durchgeführt wird, in der Regel 1 bis 15 bar.

Als Edelmetallnetzkatalysator kann jeder zur katalytischen Oxidation von Ammoniak verwendbare Edelmetallnetzkatalysator eingesetzt werden. Vorzugsweise enthält der Katalysator Platin und gegebenenfalls Rhodium und/oder Palladium als katalytisch aktive Metalle.

Das Edelmetallrückgewinnungsnetz ist vorzugsweise aus Palladium aufgebaut. Der erfindungsgemäß zur Zersetzung von N₂O eingesetzte Katalysator ist herstellbar durch Vereinigen von CuAl₂O₄ mit Zinn, Blei und/oder einem Element der II. Haupt- oder Nebengruppe des Periodensystems der Elemente als Oxid oder Salz oder in elementarer Form, und anschließendes Calcinieren bei einer Temperatur von 300 bis 1300°C und einem Druck im Bereich von 0,1 bis 200 bar. Der Katalysator kann dabei jede geeignete Form aufweisen. Vorzugsweise wird er in Strangform, insbesondere in Form von Sternsträngen eingesetzt. Der bevorzugte Durchmesser der Stränge beträgt 2 bis 10 mm, besonders bevorzugt 3 bis 6 mm. Der Einsatz des Katalysators kann auch in anderen Formen erfolgen, insbesondere auch in der Form eines Wabenkatalysators.

Vorzugsweise werden zur Herstellung des Katalysators neben CuAl₂O₄ Zink, Magnesium, Calcium. Strontium und/oder Barium als Oxid oder Salz oder in elementarer Form eingesetzt. Dabei ist der Katalysator vorzugsweise edelmetallfrei.

Zur Herstellung des Katalysators setzt man CuAl₂O₄ ein, das zu 1 bis 100 Gew.-%, bevorzugt zu 10 bis 100 Gew.-%, besonders bevorzugt zu 80 bis 100 Gew.-% als Spinell vorliegt. Besonders bevorzugt liegt es vollständig als Spinell vor. Das Vermischen mit Zinn, Blei, und/oder einem Element der II. Haupt- oder Nebengruppe des Periodensystems der Elemente erfolgt bevorzugt bei Temperaturen von 500 bis 1200°C, besonders bevorzugt von 600 bis 1100°C und vorzugsweise bei Drücken von 0,5 bis 10 bar, besonders bevorzugt bei Atmosphärendruck. Das Vermischen kann beispielsweise durch Versprühen, mechanisches Vermischen, Verrühren, Verkneten des gemahlenen Festkörpers der Zusammensetzung CuAl₂O₄ erfolgen. Besonders bevorzugt ist das Imprägnieren des ungemahlenen Festkörpers. Beim Calcinieren nach der Vermischung mit dem Zusatz ist das Kupfer vorzugsweise zumindest teilweise durch das zusätzliche Metall substituiert. Der fertige Katalysator liegt vorzugsweise zu mindestens 70%, besonders bevorzugt zu mindestens 80%, insbesondere zu mindestens 90% in einer Spinellphase vor.

Als Elemente der II. Haupt- oder Nebengruppe des Periodensystems der Elemente eignen sich neben Oxiden und den Elementen in metallischer Form auch deren Salze. Beispiele dafür sind Carbonate, Hydroxide, Carboxylate, Halogenide und oxidische Anionen wie Nitrite, Nitrate, Sulfide, Sulfate, Phosphite, Phosphate, Pyrophosphate, Halogenite, Halogenate und basische Carbonate. Bevorzugt sind Carbonate, Hydroxide, Carboxylate, Nitrite, Nitrate, Sulfate, Phosphate und basische Carbonate, besonders bevorzugt Carbonate, Hydroxide, basische Carbonate und Nitrate. Besonders bevorzugt liegt das zusätzliche Metall in der Oxidationsstufe +2 vor. Vorzugsweise werden Zn, Mg, Ca, Sr und/oder Ba, insbesondere Zn und/oder Mg eingesetzt.

Die Herstellung des Ausgangsoxides der Zusammensetzung CuAl₂O₄, bevorzugt in Form eines Spinelles, ist beispielsweise aus Z. Phys. Chem., 141 (1984), Seiten 101 bis 103 bekannt. Vorzugsweise wird ein Al₂O₃-Träger mit einer Lösung eines entsprechenden Salzes getränkt. Danach wird das Anion vorzugsweise thermisch zum Oxid zersetzt. Es ist auch möglich, das Salz mit der Aluminiumverbindung zu vermischen (beispielsweise in Suspension mit nachfolgender Sprühtrocknung), zu Verdichten, sodann in die gewünschte Form zu bringen und zu Calcinieren.

Vorzugsweise weist der Katalysator 0,1 bis 30 Gew.-% CuO, 0,1 bis 40 Gew.-% des weiteren Metalloxids, insbesondere ZnO, und 50 bis 80 Gew.-% Al₂O₃ auf.

Besonders bevorzugt ist der Katalysator aus etwa 8 Gew.-% CuO, 30 Gew.-% ZnO und 62 Gew.-% Al₂O₃ aufgebaut. Neben dem Spinell liegen dabei möglichst geringe Mengen an CuO und weiterem Metalloxid vor. Vorzugsweise liegen maximal 3,5 Gew.-% CuO und maximal 10 Gew.-% ZnO vor.

Vorzugsweise weist der Katalysator eine BET-Oberfläche von 1 bis 350 m²/g auf. Die Porosität liegt vorzugsweise zwischen 0,01 und 0,8 l/g.

Im erfindungsgemäßen Reaktor wird der Katalysator vorzugsweise in der beschriebenen Sternstrang-Form als Festbett eingesetzt. Vorzugsweise beträgt dabei die Schichtdicke des Festbettes 2 bis 50 cm, besonders bevorzugt 5 bis 10 cm. Die Verweilzeit an dem Katalysator zur Zersetzung von N₂O ist vorzugsweise kleiner als 0,1 s.

Die Verwendung des Katalysators direkt im Reaktor zur katalytischen Oxidation von Ammoniak führt zu einem vollständigen Abbau von N₂O, wobei Stickoxide gebildet werden. Die bei der Oxidation von Ammoniak gebildeten Stickoxide werden an diesem Katalysator nicht abgebaut. Der Katalysator weist eine hohe Aktivität auf. Durch die geringe Schichthöhe des Katalysatorbetts und die bevorzugte Sternstrang-Form des Katalysator tritt nur ein geringer Druckabfall im Reaktor auf. Es wird kein zusätzliches Aufheizen oder Abkühlen für die Entfernung von N₂O benötigt. Da die Reaktoren zur Aufnahme von Katalysatornetzen vorbereitet sind, ist in der Regel kein Umbau einer Salpetersäureanlage erforderlich.

Die Erfindung wird nachstehend anhand von Beispielen näher erläutert.

### Beispiel 1

In einer Laborapparatur wurde Ammoniak in einem Ammoniak-Luftgemisch mit einer Konzentration von 12,5 Vol-% Ammoniak und 87,5 Vol-% Luft an einem Pt/Rh-Netz mit einer Belastung von 37 g/h Ammoniak pro cm³ Netzfläche bei einer Temperatur von 913°C zu Stickstoffmonoxid umgesetzt. Unmittelbar hinter dem Platinnetz war eine 10 cm hohe Schicht des vorstehend als bevorzugt beschriebenen Katalysators aus 8 Gew.-% CuO, 30 Gew.-% ZnO und 62 Gew.-% Al₂O₃ angeordnet, die das Reaktionsgas bei einer Temperatur von 750°C mit einer Verweilzeit von 0,03 s durchströmte. Vor der Katalysatorschicht betrug die N₂O-Konzentration 685 ppm; nach der Katalysatorschicht waren noch 108 ppm vorhanden. Der Gehalt an Stickstoffmonoxid blieb vor und nach der Katalysatorschicht unverändert.

### Beispiel 2

In einem drucklosen Reaktor zur katalytischen Oxidation von Ammoniak zu Stickoxiden, der mit einem Platin/Rhodium-Netz als Katalysator und einem Palladium-Netz zur Edelmetallrückgewinnung und einem Wärmetauscher ausgestattet war, wurde zwischen dem Rückgewinnungsnetz und dem Wärmetauscher ein Katalysator-Festbett mit einr Schichtdicke von 9 cm angeordnet. Das Katalysatorbett enthielt den vorstehend als bevorzugt beschriebenen Katalysator aus 8 Gew.-% CuO, 30 Gew.-% ZnO und 62 Gew.-% Al₂O₃. Der Katalysator wurde als Sternstrang eingesetzt, wobei der Durchmesser des Sternstrangs 4 mm betrug. Der Reaktor wurde mit einem Gemisch aus 12,1 Vol-% Ammoniak und 87,9 Vol-% Luft beschickt, die Gasbelastung entsprach 15 t/Tag HNO₃ pro m³ Edelmetallnetz. Die Temperatur im Reaktor betrug 860°C. Die Verweilzeit am beschriebenen N₂O-Zersetzungskatalysator lag unter 0,05 s. Die Konzentration an N₂O am Ausgang des Reaktors betrug 120 ppm.

Bei einer Vergleichsmessung wurde das zusätzliche Katalysatorbett zur Zersetzung von N₂O weggelassen. Es ergab sich eine N₂O Konzentration am Reaktorausgang von 606 ppm.

Die gemessene NOₓ-Konzentration betrug in beiden Fällen 11,28 Vol-%.

## Patentansprüche

1. Reaktor für die katalytische Oxidation von Ammoniak zu Stickoxiden, der in Flußrichtung in dieser Reihenfolge einen Edelmetallnetzkatalysator und einen Wärmetauscher enthält, **dadurch gekennzeichnet, daß** zwischen dem Edelmetallnetzkatalysator und dem Wärmetauscher ein Katalysator zur Zersetzung von N₂O angeordnet ist, der herstellbar ist durch Vereinigen von CuAl₂O₄ mit Zinn, Blei und/oder einem Element der II. Haupt- oder Nebengruppe des Periodensystems der Elemente als Oxid oder Salz oder in elementarer Form, und anschließendes Calcinieren bei einer Temperatur von 300 bis 1300°C und einem Druck im Bereich von 0,1 bis 200 bar.

2. Reaktor nach Anspruch 1, **dadurch gekennzeichnet, daß** zwischen dem Edelmetallnetzkatalysator und dem Katalysator zur Zersetzung von N₂O ein Edelmetallrückgewinnungsnetz angeordnet ist

3. Reaktor nach Anspruch 1 oder 2, **dadurch gekennzeichnet, daß** der Katalysator zur Zersetzung von N₂O als Festbett in einer Schicht mit einer Höhe von 2 bis 50 cm angeordnet ist.

4. Vorrichtung zur Herstellung von Salpetersäure aus Ammoniak, umfaßend in dieser Reihenfolge
- einen Reaktor gemäß einem der Ansprüche 1 bis 3,
- eine Absorptionseinheit zur Absorption von Stickoxiden in einem wäßrigen Medium und gegebenenfalls
- eine Reduktionseinheit zur selektiven katalytischen Reduktion von Stickoxiden.

5. Verfahren zur katalytischen Zersetzung von N₂O in einem bei der Herstellung von Salpetersäure durch katalytische Oxidation von Ammoniak in einem Reaktor, der in Flußrichtung in dieser Reihenfolge einen Bdelmetallnetzkatalysator und einen Wärmetauscher enthält, erhaltenen Gasgemisch an einem Katalysator zur Zersetzung von N₂O, der zwischen dem Edelmetallkatalysator und dem Wärmetauscher angeordnet ist, so daß das aus der katalytischen Oxidation von Ammoniak erhaltene heiße Gasgemisch vor einer nachfolgenden Abkühlung mit dem Katalysator zur Zersetzung von N₂O kontaktiert wird, **dadurch gekennzeichnet, daß** der Katalysator zur Zersetzung von N₂O herstellbar ist durch Vereinigen von CuAl₂O₄ mit Zinn, Blei oder einem Element der II. Haupt- oder Nebengruppe des Periodensystems der Elemente als Oxid oder Salz oder in elementarer Form und anschließendes Calcinieren bei einer Temperatur im Bereich von 300 bis 1300°C und einem Druck im Bereich von 0,1 bis 200 bar.

6. Verfahren nach Anspruch 5, **dadurch gekennzeichnet, daß** die Verweilzeit an dem Katalysator zur Zersetzung von N₂O kleiner als 0,1 s ist.

7. Verfahren nach Anspruch 5 oder 6, **dadurch gekennzeichnet, daß** die Zersetzung von N₂O bei einer Temperatur im Bereich von 600 bis 950°C und/oder bei einem Druck im Bereich von 1 bis 15 bar durchgeführt wird.

## Claims

1. A reactor for the catalytic oxidation of ammonia to nitrogen oxides, which contains in this order in the directional flow a noble metal gauze catalyst and a heat exchanger, wherein a catalyst for the decomposition of N₂O which can be produced by combining CuAl₂O₄ with tin, lead and/or an element of main or transition group II of the Periodic Table of the Elements as oxide or salt or in elemental form and subsequently calcining the mixture at from 300 to 1300°C and a pressure in the range from 0.1 to 200 bar is installed between the noble metal gauze catalyst and the heat exchanger.

2. A reactor as claimed in claim 1, wherein a noble metal recovery gauze is installed between the noble metal gauze catalyst and the catalyst for the decomposition of N₂O.

3. A reactor as claimed in claim 1 or 2, wherein the catalyst for the decomposition of N₂O is installed as a fixed bed having a height of from 2 to 50 cm.

4. An apparatus for preparing nitric acid from ammonia, comprising in this order:
- a reactor as claimed in any of claims 1 to 3,
- an absorption unit for the absorption of nitrogen oxides in an aqueous medium and optionally
- a reduction unit for the selective catalytic reduction of nitrogen oxides.

5. A process for the catalytic decomposition of N₂O in a gas mixture obtained in the preparation of nitric acid by catalytic oxidation of ammonia in a reactor which contains in this order in the flow direction a noble metal gauze catalyst and a heat exchanger over a catalyst for the decomposition of N₂O which is installed between the noble metal catalyst and the heat exchanger so that the hot gas mixture obtained from the catalytic oxidation of ammonia is brought into contact with the catalyst for the decomposition of N₂O before subsequent cooling, wherein the catalyst for the decomposition of N₂O can be produced by combining CuAl₂O₄ with tin, lead or an element of a main or transition group II of the Periodic Table of the Elements as oxide or salt or in elemental form and subsequently calcining the mixture at from 300 to 1300°C and a pressure in the range from 0.1 to 200 bar.

6. A process as claimed in claim 5, wherein the residence time over the catalyst for the decomposition of N₂O is less than 0.1 s.

7. A process as claimed in claim 5 or 6, wherein the decomposition of N₂O is carried out at from 600 to 950°C and/or at a pressure in the range from 1 to 15 bar.

## Revendications

1. Réacteur pour l'oxydation catalytique de l'ammoniac en oxydes d'azote, qui, dans la direction d'écoulement, contient dans cet ordre, un catalyseur réticulaire à métal noble et un échangeur de chaleur, **caractérisé en ce que**, entre le catalyseur réticulaire à métal noble et l'échangeur de chaleur, est disposé un catalyseur pour décomposer N₂O, qui peut être fabriqué en combinant du CuAl₂O₄ avec de l'étain, du plomb et/ou un élément du Groupe principal ou secondaire II du Tableau Périodique des Eléments sous la forme d'oxyde ou de sel ou sous forme élémentaire, puis en calcinant à une température de 300 à 1300°C et à une pression dans la plage de 0,1 à 200 bars.

2. Réacteur selon la revendication 1, **caractérisé en ce qu'**un treillis de récupération de métal noble est disposé entre le catalyseur réticulaire à métal noble et le catalyseur pour décomposer N₂O.

3. Réacteur selon la revendication 1 ou 2, **caractérisé en ce que** le catalyseur pour décomposer N₂O est disposé sous forme de lit fixe dans une couche ayant une hauteur de 2 à 50 cm.

4. Dispositif pour la préparation de l'acide nitrique, à partir de l'ammoniac, comprenant dans cet ordre
- un réacteur selon l'une quelconque des revendications 1 à 3,
- une unité d'absorption pour absorber les oxydes d'azote dans un milieu aqueux et éventuellement
- une unité réductrice pour la réduction catalytique sélective des oxydes d'azote.

5. Procédé pour la décomposition catalytique de N₂O, dans un mélange gazeux obtenu lors de la préparation de l'acide nitrique par oxydation catalytique de l'ammoniac dans un réacteur, qui, dans la direction d'écoulement contient dans cet ordre, un catalyseur réticulaire à métal noble et un échangeur de chaleur, sur un catalyseur pour décomposer N₂O, qui est disposé entre le catalyseur à métal noble et l'échangeur de chaleur, de sorte que le mélange gazeux chaud obtenu de l'oxydation catalytique de l'ammoniac est mis en contact avec le catalyseur pour décomposer N₂O avant un refroidissement subséquent, **caractérisé en ce que** le catalyseur pour décomposer N₂O, peut être fabriqué en combinant CuAl₂O₄ avec de l'étain, du plomb ou un élément du Groupe principal ou secondaire II du Tableau Périodique des Eléments sous la forme d'oxyde ou de sel ou sous forme élémentaire, puis en calcinant à une température dans la plage de 300 à 1300°C et à une pression dans la plage de 0,1 à 200 bars.

6. Procédé selon la revendication 5, **caractérisé en ce que** la durée de séjour sur le catalyseur pour décomposer N₂O est inférieure à 0,1 s.

7. Procédé selon la revendication 5 ou 6, **caractérisé en ce que** la décomposition de N₂O est réalisée à une température dans la plage de 600 à 950°C et/ou à une pression dans la plage de 1 à 15 bars.
